# EUROPÄISCHE PATENTSCHRIFT

(11) **EP 4 534 791 B1**
(45) Veröffentlichungstag und Bekanntmachung des Hinweises auf die Patenterteilung: **18.02.2026**
(21) Anmeldenummer: 24204671.2
(22) Anmeldetag: 04.10.2024
(51) Int. Cl.: E06B 5/00, G09B 19/00, G09B 9/00, A62C 99/00

(54) **TRAININGSTÜR FÜR EINSATZKRÄFTE**
TRAINING DOOR FOR APPLIED FORCES
PORTE D'ENTRAÎNEMENT POUR FORCES D'INSERTION

(30) Priorität: 06.10.2023 DE 202023105794 U
(43) Veröffentlichungstag der Anmeldung: 09.04.2025
(73) Patentinhaber: Inzinger, Andreas, 81541 München (DE); Ufertinger, Marc, 81671 München (DE)
(72) Erfinder: Inzinger, Andreas, 81541 München (DE); Ufertinger, Marc, 81671 München (DE)
(74) Vertreter: Ter Meer Steinmeister & Partner

(56) Entgegenhaltungen:
- ES-U- 1 295 614
- US-A1- 2015 251 032
- US-B2- 8 167 621
- US-B2- 8 197 257
- US-B2- 8 485 825

## Beschreibung

Die vorliegende Anmeldung betrifft eine Trainingstür für Einsatzkräfte.

Einsatzkräfte wie Feuerwehr und Polizei sind häufig Situationen ausgesetzt, in denen Türen Rettungswege versperren, die möglichst schnell und effizient überwunden werden müssen. Für derartige Zwecke schlägt die vorliegende Anmeldung eine Trainingstür vor, mit der verschiedene Türtypen simuliert werden können, um somit für Rettungseinsätze ein Aufbrechen bzw. Überwinden von Türen zu trainieren. Durch die Möglichkeit, verschiedene Türtypen zu simulieren, kann der Einsatz der richtigen Werkzeuge bzw. der effiziente Einsatz dieser Werkezeuge erprobt werden.

Bisher wird ein Aufbrechen von Türen an realen im Markt verfügbaren Türen trainiert. Dies hat den Nachteil, dass in den meisten Fällen die Tür nach dem Aufbrechen zerstört ist und wenigstens teilweise ersetzt bzw. repariert werden muss. Ein weiterer Nachteil einer derartigen Trainingsmethode besteht darin, dass es sehr viele verschiedene Türblattformen und Türrahmenformen bzw. Türblattprofile gibt, die jeweils verschiedene Herangehensweisen zum effizienten Aufbrechen bzw. Überwinden dieser Tür erfordern.

Bekannte Übungstüren sind meist nur für eine Aufbrechvorgehensweise ausgelegt und nicht in der Lage, die Realität abzudecken, insbesondere aufgrund der unterschiedlichen Türtypen oder auch die verschiedenen Zeitanforderungen für ein Aufbrechen.

ES 1 295 614 U beschreibt eine Trainingstür mit einem Türrahmen und einem Türblatt.

US 8 197 257 B2 beschreibt eine Trainingstür nach dem Oberbegriff des Anspruchs 1 mit einem Türblatt mit einer Ausbuchtung, um das Schloss aufzunehmen.

Weitere Trainingstüren sind in US 2015/251032 A1, US 8 167 621 B2 und US 8 485 825 B2 beschrieben.

Vor diesem Hintergrund ergibt sich die Aufgabe der vorliegenden Anmeldung, eine Trainingstür anzugeben, die verschiedene Türblattprofile, Türrahmenprofile bzw. Türblattaufbauten oder Türrahmenaufbauten simulieren kann, ohne beim Aufbrechen die Tür zu zerstören. Eine weitere Aufgabe ist es, den Schwierigkeitsgrad beim Aufbrechen einer Tür einstellbar zu wählen, um beim Trainieren von Einsatzkräften verschiedene zusätzliche Sicherheitsmechanismen zu simulieren

Die Aufgabe wird durch die Merkmale der unabhängigen Ansprüche gelöst. Vorteilhafte Ausgestaltungen sind in den Unteransprüchen angegeben.

In einer ersten Ausgestaltung wird eine Trainingstür für Einsatzkräfte angegeben, die einen Türrahmen umfasst, der auf einer Bodenplatte befestigt ist, wobei am Türrahmen ein Türblatt befestigt ist, und das Türblatt an wenigstens zwei Scharnieren im Türrahmen aufgehängt ist. Wenigstens eines der Scharniere ist mit einer einstellbaren Anpressvorrichtung versehen, um den Anpressdruck der Tür am Türrahmen einzustellen.

In einer anderen Ausgestaltung der vorliegenden Erfindung ist eine Trainingstür für Einsatzkräfte angegeben, die einen Türrahmen aufweist, der an einer Bodenplatte befestigt ist, wobei ein Türblatt in dem Türrahmen befestigt ist und das Türblatt an wenigstens zwei Scharnieren im Türrahmen aufgehängt ist. Darüber hinaus ist auf einer Schlossseite des Türrahmens eine Aufnahmevorrichtung für ein Wechselmodul angeordnet, um somit verschiedene Türrahmenprofile und/oder Türblattprofile zu simulieren. Alternativ oder zusätzlich kann auf der Schlossseite des Türblatts eine Aufnahmevorrichtung für ein Türblattwechselmodul angeordnet sein, um verschiedene Türblattprofile zu simulieren.

Durch das Rahmenwechselmodul bzw. das Türblattwechselmodul ist es möglich, sowohl am Türrahmen verschiedene Profile als auch verschiedene Materialien zu simulieren als auch für das Türblatt verschiedene Türblattprofile als auch Türblattmaterialien zu simulieren.

Das Rahmenwechselmodul und/oder auch das Türblattwechselmodul sind dabei so ausgestaltet, dass sie austauschbar sind, so dass diese falls sie durch verschiedene Trainingsversuche beschädigt sind, einfach ausgewechselt werden können, ohne dass das Türblatt bzw. der Türrahmen ausgewechselt werden muss.

Das Rahmenwechselmodul und/oder auch das Türblattwechselmodul sind symmetrisch zueinander aufgebaut. Dies ermöglicht ein Öffnen der Tür von beiden Seiten üben zu können. Dazu ist es nur erforderlich das Türblatt um eine horizontale Mittelachse um 180° zu drehen.

Die Scharniere können Scharnierbolzen aufweisen, mit denen das obere und das untere Scharnier mit dem Türblatt bzw. der Scharnieröse gekoppelt wird. Beim Drehen wird das Türblatt so gedreht, dass das untere Scharnier nach dem Drehen nach oben kommt und umgekehrt.

Ein Scharnier kann dazu jeweils zwei Bohrungen aufweisen, in die der Scharnierbolzen eingeführt werden kann.

Die einstellbare Anpressvorrichtung für das Scharnier ermöglicht es, einfach einen Anpressdruck des Türblatts an dem Rahmen auf der Schlossseite zu simulieren. Somit ist es möglich, eine festsitzende Tür zu simulieren als auch eine lose im Türrahmen sitzende Tür zu simulieren. Ebenso ist es über den einstellbaren Anpressdruck möglich, die Kräfte zu erhöhen, die zum Aufbrechen der Tür erforderlich sind.

Mittels der einstellbaren Anpressvorrichtung wird der Anpressdruck des Türblatts von der Scharnierseite in Richtung Schlossseite eingestellt. Dabei sind vorzugsweise an beiden Scharnieren einstellbare Anpressvorrichtungen angesehen. Eine einstellbare Anpressvorrichtung kann mittels einer Feder realisiert werden, deren Federweg verstellbar ist. Dabei kann durch die Auswahl der Länge des Federwegs ein vorbestimmter Wert des Anpressdrucks ausgewählt bzw. eingestellt werden, wobei jeder der vorbestimmten Werte jeweils einen Türtyp repräsentiert.

Die einstellbaren Anpressvorrichtung weist vorzugsweise einen zentralen Führungsbolzen auf, um den herum die Feder angeordnet ist. Dadurch ist eine sichere Führung der Feder gegeben. Die Länge des Führungsbolzen kann durch Hereinschrauben bzw. Herausschrauben aus dem Scharnier geändert werde, wodurch sich der Federweg verstellen lässt.

Die Feder und/oder der Führungsbolzen können vorzugsweise horizontal verlaufen.

Um ein Rahmenwechselmodul am Türrahmen zu befestigen, weist der Türrahmen eine Aufnahmevorrichtung für das Rahmenwechselmodul auf. Die Aufnahmevorrichtung kann durch mehrere Bohrungen im Türrahmenprofile realisiert sein, in die Schraubenköpfe des Rahmenwechselmoduls eingesetzt werden. Zusätzlich oder alternativ ist es möglich, dass der Rahmen eine Aussparung aufweist, in die das Rahmenwechselmodul einsetzbar ist und dann beispielsweise mit Schrauben bzw. Verspannelementen in der Ausbuchtung im Türrahmen befestigt wird. D. h. die Aufnahmevorrichtung kann einfachsten falls durch Löcher im Türrahmen realisiert, an denen ein Rahmenwechselmodule befestigt wird. Ebenso kann alternativ oder zusätzlich eine Aussparung im Türrahmenprofil vorgesehen sein, in die das Rahmenwechselmodul wenigstens teilweise eingesetzt wird. Damit lässt sich eine noch stabilere Befestigung des Rahmenwechselmoduls realisieren. Es können auch mehrere Rahmenwechselmodule angewendet werden, die jeweils in mehreren Aussparungen angeordnet sind, um somit im Schlossbereich einen anderen Widerstand zu simulieren als im Kopf oder Fußbereich der Tür, in denen bspw. zusätzliche Sicherungsbolzen zwischen Türblatt und Türrahmen befindlich sind, die zusätzlich überwunden werden müssen.

Das Türblatt weist einen Türblattrahmen auf, der eine Aufnahmevorrichtung für das Türblattwechselmodul aufweist. Die Aufnahmevorrichtung für das Türblattwechselmodul kann durch eine Aufnahmeausbuchtung im Türblattrahmen realisiert sein. Die Aufnahmeausbuchtung oder Aussparung im Türblattrahmen kann entweder nur das Türblattwechselmodul oder das Türblattwechselmodul und das Rahmenwechselmodul aufnehmen.

Da bei den meisten Türen der höchste Widerstand im Schlossbereich der Tür vorhanden ist, ist das Türblattwechselmodul und/oder das Türblattwechselmodul und das Rahmenwechselmodul in diesem Bereich angeordnet.

Durch die Aufnahmevorrichtung im Türblattrahmen kann ein ausreichend großer Bereich bzw. Raum zur Verfügung gestellt werden, in dem das Türblattwechselmodul und/oder das Rahmenwechselmodul Platz finden können und sicher jeweils am Türblattrahmen bzw. am Türrahmen befestigt werden können.

Es ist ebenso möglich, das Türblattwechselmodul mit dem Türblattrahmen zu verschrauben, so dass das Türblattwechselmodul am Türrahmen zum Anliegen kommt.

Das Rahmenwechselmodul und/oder das Türblattwechselmodul können dabei als Doppelfalz oder Einfachfalz ausgebildet sein. Das heißt, jedes der Wechselmodule kann ein Querschnittsprofil aufweisen, in dem einer oder mehrere Absätze ausgebildet sind, um somit verschiedene Türblattprofile und/oder verschiedene Türrahmenprofile zu simulieren.

Neben den verschiedenen Profilen können für das Türblattwechselmodul und/oder das Rahmenwechselmodul auch verschiedene Materialien verwendet werden. So ist es möglich, beide Wechselmodule aus Holz und/oder Metall herzustellen.

Weiter sind an einer oder an beiden Seiten des Türrahmens und/oder des Türblatts Einschubvorrichtungen bspw. in Form von runden oder eckigen Ösen vorgesehen, durch die Verriegelungselemente geschoben werden können, um somit einen Einbruchriegel einer Tür zu simulieren, der ein zusätzliches Schließelement der Tür darstellt und durch die Einsatzkräfte überwunden werden muss. Die mehreren Einschubvorrichtungen können dabei auf verschiedenen Türhöhen befestigt sein, so dass auch mehrere Verriegelungselemente simuliert werden können. Durch diese Einschubvorrichtungen und entsprechend eingeführte Verriegelungselemente ist es auch möglich, komplizierte Hochsicherheitstüren mit Schließbolzen außerhalb des Schlossbereichs zu simulieren.

Vorzugsweise sind am Türrahmen auf beiden Seiten (Frontseite und Rückseite des Türblatts) Einschubvorrichtungen angeordnet, die auf gleicher Höhe angeordnet sind. Dadurch kann das Türblatt einfach gedreht werden und eine andere Öffnungsrichtung simuliert werden. Die Einschubvorrichtungen am Türrahmen passen dann bei gedrehtem Türblatt zu den Einschubvorrichtungen am Türblatt. D.h. vor der Drehung des Türblatts sind die Einschubvorrichtungen am Türrahmen auf einer Höhe mit den Einschubvorrichtungen an der Frontseite des Türblatts. In diesem Fall öffnet die Tür zur Fronseite (nach außen). Nach der Drehung des Türblatts um ihre horizontale Mittelachse werden die Scharnierbolzen in die zur Rückseite der Tür ausgerichteten Bohrungen eingeführt und die Tür öffnet zur Rückseite (nach innen). In diesem Fall sind die Einschubvorrichtungen des Türblatts auf der Rückseite und auf einer Höhe mit den Einschubvorrichtungen an der Rückseite des Türrahmens.

In einer weiteren Ausgestaltung weist die Bodenplatte einen Bodenplattenrahmen auf, in den Standflächenbleche bzw. Standflächenplatten einsetzbar sind, die verschiedene Bodenbeläge aufweisen können, um somit verschiedene Bodenbeläge zu simulieren. Die Bodenplatte kann höhenverstellbar sein, um die Tür in einen Trainingszustand zu versetzen, bei dem die Bodenplatte sicher auf dem Boden aufsteht bzw. in einen Transportzustand, bei dem die Bodenplatte angehoben wird, um verfahren zu werden. Die Standflächenbleche können Loch- oder Riffelbleche sein.

Darüber hinaus kann die Bodenplatte mit höhenverstellbaren bzw. klappbaren Rädern versehen sein, um die Tür zu bewegen.

Zusätzlich oder alternativ ist es möglich, dass die Trainingstür Einschubholme aufweist, um einen Hubwagen bzw. Gabeln eines Gabelstaplers einführen zu können, um die Tür zu bewegen.

Der Türrahmen der Trainingstür ist vorzugsweise aus Metall ausgebildet und beispielsweise als Vierkanthohlprofil ausgebildet. In einer Ausgestaltung ist der Türrahmen mit der Bodenplatte verschweißt bzw. auf Rahmenansatzstücke der Bodenplatte gesteckt und mit dem Türrahmen verschraubt.

Das Türblatt weist einen umlaufenden Türblattrahmen auf, bspw. auch aus einem Vierkanthohlprofil.

In den Türblattrahmen sind ein oder mehrere Platten einsetzbar, die aus verschiedenen Materialien hergestellt sein können bzw. verschiedene Stärken (Dicken) aufweisen können, um verschiedene Türaufbauten zu simulieren.

Das Türblatt kann einen oder mehrere Teilrahmenbereiche aufweisen, in die jeweils eine Platte aus verschiedenen Materialien bzw. verschiedenen Stärken einsetzbar ist, um verschiedene Türaufbauten zu simulieren.

Das Türblatt ist am Türrahmen befestigt bzw. in verschiedenen Bohrungen an den Scharnieren, um eine Türöffnung in beide Richtungen zu simulieren, um somit eine nach innen bzw. nach außen öffenbare und auch links und rechts angeschlagene Tür zu simulieren.

Im Folgenden wird anhand der Figuren der Aufbau der Trainingstür beschrieben.
Fig. 1 zeigt eine Frontansicht einer erfindungsgemäßen Trainingstür,
Fig. 2 zeigt eine perspektivische Darstellung der erfindungsgemäßen Trainingstür;
Fig. 3 zeigt einen erfindungsgemäßen Türrahmen in einer Frontalansicht;
Fig. 4 zeigt den erfindungsgemäßen Türrahmen im Seitenprofil.
Fig. 5 zeigt einen Schnitt durch ein erfindungsgemäßes Scharnier mit einer Anpressvorrichtung.
Fig. 6 zeigt einen Schnitt durch den erfindungsgemäßen Türrahmen mit einem Türblattwechselmodul für eine Brandschutztür.
Fig. 7 zeigt einen Schnitt durch einen Türrahmen mit einem Rahmenwechselmodul für einen Einfachfalz.
Fig. 8 zeigt einen Schnitt durch einen Türrahmen mit einem Rahmenwechselmodul mit einem Doppelfalz.
Fig. 8a zeigt eine Rückseite eines Rahmenwechselmoduls oder Türblattwechselmoduls, mit der es am Türrahmen bzw. am Türblatt anliegt.
Fig. 9 zeigt eine Bodenplatte in einer Draufsicht.
Fig. 10a, b zeigen das erfindungsgemäße Türblatt in einer Seitenansicht und von der Stirnseite
Fig. 11 zeigt einen Schnitt durch eine Bodenplatte mit einer Hebelrolle.
Fig. 12 bis 14 zeigen verschiedene Türblattwechselmodule, die einen Doppelfalz, Einfachfalz bzw. eine Brandschutztür simulieren.
Fig. 15 zeigt einen Türrahmen mit Einfachfalzmodul und einem Türblatt mit einen Holzwechselmodul.
Fig. 16 zeigt einen Türrahmen mit Doppelfalzmodul entsprechend Fig. 6 oder 7.
Fig. 17 zeigt einen Rahmenwechselmodul mit Öffnung für einen Schließzylinder
Fig. 18 zeigt einen Türrahmen mit Einfachfalzmodul und einem Türblatt mit einen Brandschutztürmodul.
Fig. 19 zeigt ein Scharnier von außen.

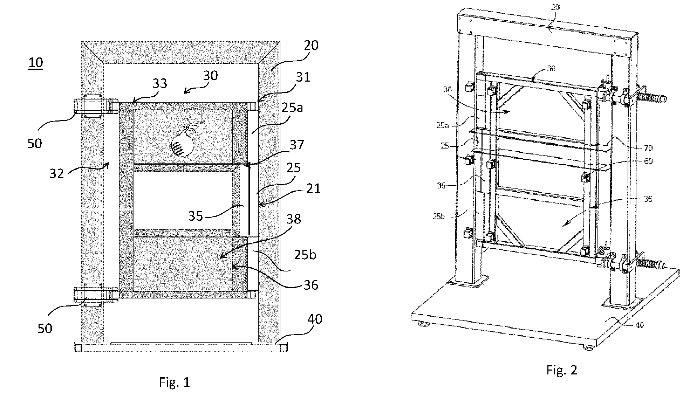

Fig. 1 zeigt eine Frontansicht einer Trainingstür 10 mit einem Türrahmen 20, einem Türblatt 30 und einer Bodenplatte 40. Das Türblatt 30 ist an zwei Scharnieren 50 im Türrahmen 20 aufgehängt. Das Türblatt 30 weist eine Schlossseite 31 und eine Scharnierseite 32 auf. Das Türblatt 30 weist einen umlaufenden Türblattrahmen 33 auf, der verschiedene Teilrahmenbereiche 36a-36c aufweist, in denen Platten 38 einsetzbar sind. In dem Beispiel der Tür gemäß Fig. 1 ist ein Türblattwechselmodul 35 dargestellt, das in einem Aufnahmebereich 37 des Türblattrahmens 33 im Bereich des Schlosses des Türblatts 30 angeordnet ist. Weiter ist ein Rahmenwechselmodul 25 dargestellt, das in einem Aufnahmebereich 21 des Türrahmens 20 angeordnet ist und dem Türblattwechselmodul 25 gegenüberliegt.

Der Aufnahmebereich 37 des Türblatts 30 bzw. genauer des Türblattrahmens 33 wird durch eine Ausbuchtung im umlaufenden Türblattrahmen 33 gebildet, wobei der Türblattrahmen 31 in diesen Bereich nach innen verspringt und somit einen Aufnahmeraum für das Türblattwechselmodul 35 bildet. Dieser Aufnahmebereich 37 kann auch dazu dienen, einen Teil des Rahmenwechselmodul 25 mit aufzunehmen. Dadurch können die beiden Wechselmodule 25 und 35 in einem vordefinierten Raum gegenüberliegend angeordnet werden. Dadurch lassen sich verschiedenste Rahmen- und Türblattprofile nachbilden, wobei die Wechselmodule 25 und 35 einfach und schnell austauschbar sind.

Figur 2 zeigt eine perspektivische Darstellung der erfindungsgemäßen Trainingstür 10. Auf der Scharnierseite 32 zwischen Türblatt 30 und Türrahmen 20 ist ein vordefinierter Spalt vorhanden. Da sich die kritischen Stellen einer Trainingstür 10 auf der Schlossseite 31 befinden, kann auf der Scharnierseite 32 ein Spalt vorhanden sein. Dies ermöglicht ein einfaches Einhängen des Türblatts 30 in die Scharniere 50. Außerdem muss der Türblattrahmen 33 auf dieser Seite nicht mit hoher Präzision hergestellt werden. Wie in Figur 2 dargestellt, können die Eckbereiche des Türblattrahmens 33 mit schrägen Querverstrebungen versehen sein, um die Steifigkeit des Türblatts 30 zu erhöhen.

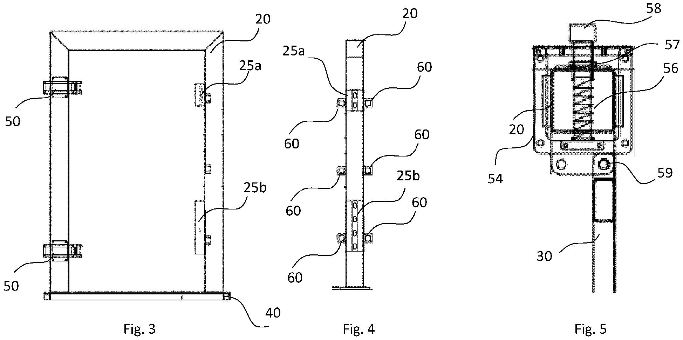

Figur 3 zeigt eine Seitenansicht eines erfindungsgemäßen Türrahmens 20, an dem zwei Scharniere 50 angebracht sind. An der Schlossseite 31sind Einschubvorrichtungen 60 in Form von Vierkantösen angebracht, die ein Einschieben von Verriegelungselementen 70 (nicht dargestellt) ermöglichen, um somit zusätzliche Schließbolzen oder Sicherungsmechanismen von Türen zu simulieren.

Fig. 4 zeigt eine Schnittansicht des Türrahmens 20 von innen basierend auf Figur 3. Wie in Fig. 4 dargestellt, können die Einschubvorrichtungen 60 auf beiden Seiten des Türrahmens 20 angeordnet werden, insbesondere auf gleicher Höhe auf der Innenseite und der Außenseite des Türrahmens 20.

Im oberen und/oder unteren Bereich des Türrahmens 20 sind Hilfsrahmenmodule 25a, 25b angebracht, um einen festen Sitz des Türblatts 30 im Türrahmen 20 zu gewährleisten. Zwischen den Hilfsrahmenmodule 25a, 25b und dem Rahmenwechselmodul 25 können Holzmodule eingesetzt werden, um auch daran ein Aufhebeln zu üben. Das Rahmenwechselmodul 25 und Hilfsrahmenmodule 25a, 25b sind hohl, so dass ein angepasstes Holzstück eingesetzt werden kann.

Die Schnittdarstellung eines Scharniers 50 ist in Figur 5 dargestellt. Diese zeigt eine Spiralfeder 56, deren Federweg veränderbar ist, wodurch der Anpressdruck des Scharniers 50 auf das Türblatt 30 erhöht wird, so dass das Türblatt 30 mit mehr oder weniger Druck auf den Türrahmen auf der Schlossseite 31 gepresst wird.

Alternativ kann man auch ein Gewinde-Endstücks auf einen Führungsbolzen 58 einschrauben und den Federweg verkürzen. Der Führungsbolzen 58 selbst hat ein Außengewinde. Die Feder umschließt den Führungsbolzen 58 innerhalb des Türrahmens 20. Wird das Gewinde-Endstück weiter auf den Federbolzen 56 aufgeschraubt, schiebt sich die Hülse weiter in den Hohlraum des Türrahmens und verkürzt die Federlänge und erhöht somit die Vorspannung.

Das Türblatt 30 wird mit einsetzbaren Scharnierbolzen in Bohrungen 59 des Scharniers 50 eingesetzt. Das Scharnier 50 weist mindestens zwei Bohrungen 59 auf, um die Tür auf beiden Seiten des Türrahmens 20 einhängen zu können, um somit verschiedene Öffnungsrichtungen der Tür zu simulieren.

Es ist auch möglich, den Führungsbolzens 58 zu drehen, so dass der Federweg der Spiralfeder 56 verändert wird und sich somit der Anpressdruck für die Tür verändert. Der zentral in der Spiralfeder 56 verlaufende Führungsbolzen 58 sichert eine zuverlässige Führung der Feder 56 im Hohlraum des Türrahmens 20. Es aber auch möglich, die Feder 56 außerhalb des Hohlraums anzuordnen.

Am Führungsbolzen 58 ist ein Gewinde vorhanden, auf dem eine Führungsmutter 57 läuft, die am Türrahmen 20 befestigt ist, wodurch sich der Federweg beim Hinein- oder Herausschrauben des Führungsbolzen 58 verändert.

Das Scharnier 50 hat einen Scharnierrahmen 54, der um den Türrahmen 20 herum verläuft und vom Türrahmen 20 in einer horizontalen Richtung geführt wird, wenn der Führungsbolzen 58 gedreht wird. Beim Hineinschrauben des Führungsbolzens 58 wird somit der Scharnierrahmen 54 in Richtung Schlossseite 31 geschoben, wodurch sich das Türblatt, das in die Bohrungen 59 in dem Scharnierrahmen 54 eingehängt ist, auch in die Richtung der Schlossseite 31 bewegt und somit den Anpressdruck erhöht. Der zentrale Führungsbolzen 58 ermöglicht eine einfache Ausrichtung der Tür beim Erhöhen des Anpressdrucks. Die Führung des Scharnierrahmens 54 kann auf seitlich hervorstehenden Stegen am Türrahmenprofil erfolgen. Dadurch wird ein Verkanten des Scharnierrahmens 54 beim Eindrehen oder Ausdrehen des Führungsbolzens 58 verhindert.

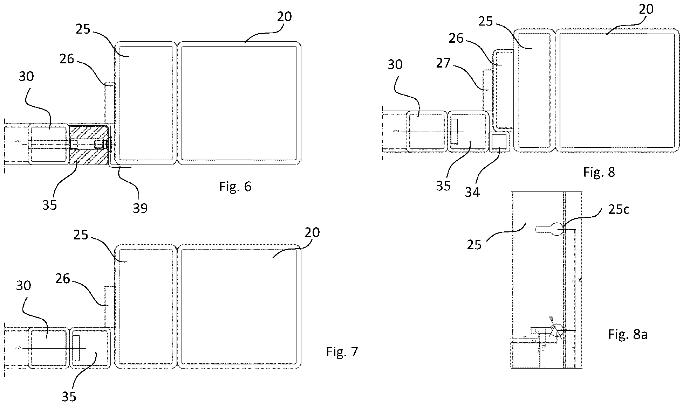

Figuren 6-8 zeigen verschiedene Querschnittsprofile des Türrahmens 20 und des Türblatts 30. In Figur 6 ist ein Profil einer Brandschutztür dargestellt. Am Türrahmen 20 ist dazu als Rahmenwechselmodul 25 ein Einfachfalzmodul angeordnet. Dazu befindet sich auf dem Rahmenwechselmodul 25 ein Anschlag 26 gegen den das Türblatt 30 bzw. das Türblattwechselmodul 35 anschlägt bzw. an diesem im geschlossenen Zustand der Tür anliegt. Das Türblattwechselmodul 35 weist einen viereckigen Querschnitt auf, der am Türblattrahmen 31 verschraubt ist. Um den Querschnitt des Türblattwechselmoduls 35 ist ein Metallblech 39 gebogen, das von einer Anschlagseite um die Stirnseite des Türblattwechselmoduls 35 herum verläuft und beim Anschlagen am Rahmenwechselmodul 25 dieses teilweise überdeckt.

In Figur 7 ist ein Profil für eine Tür mit einem Einfachfalz am Türrahmen 20 dargestellt. Das Türblatt 30 schlägt stumpf in den Türrahmen 20 ein und schließt bündig ab. Am Türrahmen 20 ist dazu als Rahmenwechselmodul 25 ein Einfachfalzmodul mit einem mittig angeordneten Anschlag 26 angeordnet. Das Türblattwechselmodul 35 weist einen viereckigen Querschnitt auf, insbesondere mit gleicher Stärke wie der Türblattrahmen. Das Türblattwechselmodul 35 ist im Aufnahmebereich 37 am Türblattrahmen 33 befestigt. Dazu können im Türblattrahmen 33 Bohrungen vorgesehen sein, in die Bolzen eingeschraubt werden, um das Türblattwechselmodul 35 am Türblattrahmen 33 zu befestigen. Alternativ können am Türblattwechselmodul 35 Öffnungen mit anschließendem Langloch 25c vorhanden sein, in die abstehende Bolzenköpfe vom Türblattrahmen 33 eingesetzt werden.

Der Bereich auf Höhe des Schlosses (nicht dargestellt) wird somit durch den Aufnahmebereich 37 für das Türblattwechselmodul 35 und den Aufnahmebereich 21 für das Rahmenwechselmodul 25 gebildet. Dieser Bereich wird sowohl vom Türblattwechselmodul 35 als auch vom Rahmenwechselmodul 25 ausgefüllt, so dass diese aneinander anliegen.

Das Türblattwechselmodul 35 und das Rahmenwechselmodul 25 sind gleich lang, bzw. weisen die gleiche Höhe auf. Die Breite vom Türblattwechselmodul 35 entspricht dem Türblattrahmen 33. Die Breite vom Rahmenwechselmodul 25 entspricht der Breite des Türrahmens 20

Alternativ können vom Rahmen 20 oder auch vom Türblatt 30 ein oder mehrere Gewindebolzen abstehen, auf die dann das Türblattwechselmodul 35 oder das Rahmenwechselmodul 25 mit Bohrungen aufgesetzt wird und mittels einer Mutter festgezogen werden kann.

Erfindungsgemäß weisen das Türblattwechselmodul 35 und das Rahmenwechselmodul 25 die gleiche Höhe auf. Vorzugsweise liegen sich das Türblattwechselmodul 35 und das Rahmenwechselmodul 25 gegenüber, so dass sie nach dem Drehen des Türblatts um die horizontale Mittelachse wieder aneinander anschlagen, wobei dann die Bewegungsrichtung des Türblatts eine andere ist. In der ersten Position bzw. vor der Drehung geht das Türblatt 30 nach außen auf, also zur Frontseite. Nach der Drehung geht das Türblatt nach innen auf. Somit lassen sich insbesondere Wohnungstüren, die nach innen öffnend simulieren. Es gibt jedoch auch viele Situationen, bei denen die Einsatzkräfte auf eine Tür treffen, die nach Außen öffnet.

Der obere und untere Bereich oberhalb und unterhalb des Türblattrahmens 33 innerhalb des Türrahmens 20 ist offen oder verschlossen (nicht dargestellt) und kann nach Bedarf mit geeigneten Materialen ausgefüllt werden.

Vorzugsweise ist das Türblatt 30 in drei im Wesentlichen gleichgroße Teilbereiche 36a-36c aufgeteilt.

Vorzugsweise weist das Rahmenwechselmodul 25 und/oder das Türblattwechselmodul 35 die gleiche Höhe auf, wie der mittlere Teilbereich 36b.

Figur 8 zeigt ein Profil für eine Tür mit einem Doppelfalz am Türrahmen 20 und am Türblatt 30. Am Türrahmen 20 ist dazu als Rahmenwechselmodul 25 ein Doppelfalzmodul mit einem mittig angeordneten ersten Anschlag 26 und einem kleinerem zweiten Anschlag 27 angeordnet. Die Anschläge 26 und 27 sind auf einer mittigen Achse des Türrahmens 20 und des Rahmenwechselmoduls 25 angeordnet. Das Türblattwechselmodul 35 weist einen viereckigen Querschnitt auf, das im Aufnahmebereich 37 am Türblattrahmen 31 befestigt ist. An dem Türblattwechselmodul 35 ist ein Türblattanschlag 34 (kleinerer Vierkantquerschnitt) befestigt, der an den Abstand zwischen Rahmenwechselmodul 25 und dem ersten Anschlag 26 angepasst ist. Die Profiltiefe des Türblattwechselmoduls 35 ist an die Einschlagtiefe am Rahmen angepasst, d. h. zwischen Außenseite des Türrahmens 20 und der Anschlagseite am zweiten Anschlag 27.

Das Türblattwechselmodul 35 kann mit dem Türblattrahmen 30 verschraubt sein oder es können Bohrungen im Türblattwechselmodul 35 vorgesehen sein, in die Bolzen eingeschraubt werden, um das Türblattwechselmodul 35 am Türblattrahmen 31 zu befestigen. Alternativ können am Türblattwechselmodul 35 Öffnungen mit anschließendem Langloch 25c (siehe auch Fig. 8a) vorhanden sein, in die abstehende Bolzenköpfe vom Türblattrahmen eingesetzt werden. Die Befestigung der Wechselmodule kann auch mittels Schnellspannern erfolgen, d.h. das Wechselmodul wird auf den abstehenden Bolzenkopf gesetzt und dann nach oben, unten oder seitlich verschoben (in das Langloch), wobei der Schnellspanner, ähnlich wie beim Fahrrad, die Funktion der Mutter übernimmt und durch Umlegen eines Hebels, den Bolzenkopf anzieht und damit das Wechselmodul am Türrahmen oder am Türblatt befestigt.

Die einzelnen Wechselmodule sollten miteinander verschweißt oder fest verschraubt oder verbunden sein, da ein Aufbrechen der Trainingstür zwischen Türblattwechselmodul 35 und Rahmenwechselmodul 25 erfolgt.

Jedes der Wechselmodule 25 oder 35 kann auf der Rückseite Ausfräsungen (25c) aufweisen, um sie mittels eines Bolzens mit Schnellspanner am Türrahmen 20 oder Türblattrahmen 33 zu befestigen.

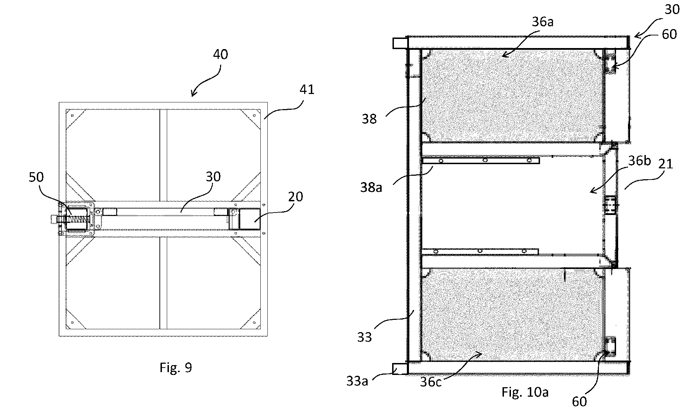

Fig. 9 zeigt eine Draufsicht auf eine Bodenplatte 40 mit einem Bodenplattenrahmen 41, auf dem der Türrahmen 20 aufsteht. Im Bereich des Scharniers 50 ist die Anpressvorrichtung 55 um den Türrahmen 20 herum angeordnet, wobei sich durch Drehen des Führungsbolzens 58 der Anpressdruck einstellen lässt, mit dem das Türblatt 30 gegen den Türrahmen 20 auf der Schlossseite 31 drückt. In die offenen Bereiche der Bodenplatte 40 oberhalb und unterhalb des Türblatts 30 lassen sich nicht dargestellte Bodenplatten mit verschiedenen Belägen oder Oberflächen einsetzen.

Figur 10a zeigt eine Seitenansicht eines erfindungsgemäßen Türblatts 30. Das Türblatt 30 wird von einem umlaufenden Türblattrahmen 31 umgeben, der auf der Scharnierseite 31 Scharnierösen 33a aufweist, mit denen der Türblattrahmen 31 bzw. das Türblatt 30 in die Bohrungen 59 des Scharniers 50 eingehängt werden kann. Es sind drei verschiedene oder voneinander getrennte Teilrahmenbereiche 36a-36c dargestellt, die durch Abschnitte des Türblattrahmens 31 voneinander getrennt sind. In die Teilrahmenbereiche 36a-36c können verschiedene Platten 38 eingesetzt werden. Dazu dienen bspw. die Befestigungsleisten 38a, an denen die Platten 38 befestigt werden können. Dadurch können verschiedene Türblattmaterialien, wie Vollholz, Metall oder Möbelplatte oder mit Karton gefüllte Türprofile nachgebildet werden. Insbesondere die Federeigenschaft des Türblatts kann dadurch simuliert werden. Außerdem kann ein Aufsägen oder Aufflexen der Platten 38 trainiert werden.

Das Türblatt ist über die Scharnierösen 33a durch einen Bolzen mit dem Scharnier 50 über Loch 59 verbunden. Die Bolzen können gelöst werden und das Türblatt kann entnommen werden und um 180 Grad gedreht werden um auf der anderen Seite eingehängt werden. Somit können wir darstellen: linksöffnende Tür nach innen und außen sowie rechtsöffnende Türe nach innen und außen.

In dem mittleren Teilbereich 36b kann auch ein Metallaufsatz (bspw. eine Stahlplatte) befestigt werden, der als Rammenaufsatz dient. Diese Platte kann man mit einer Ramme rammen ohne das Türblatt 30 zu beschädigen.

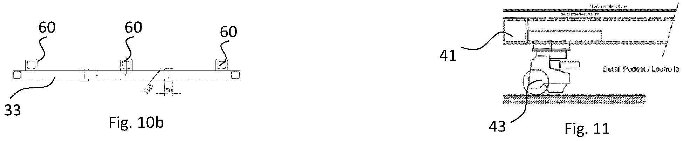

Figur 10b zeigt eine Ansicht eines erfindungsgemäßen Türblatts 30 von der Stirnseite, d.h. von der Seite, die im geschlossenen Zustand der Tür am Türrahmen 20 anliegt.

Figur 11 zeigt eine Darstellung eines unteren Abschnitts einer Bodenplatte 40, bei der eine Hebelrolle bzw. ein höhenverstellbares Rad 43 dargestellt ist.

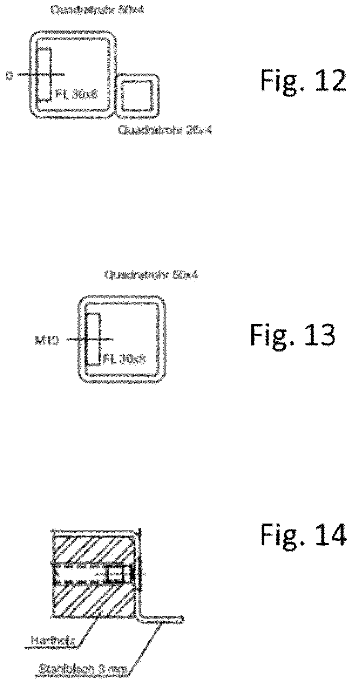

Figuren 12-14 zeigen verschiedene Profile für das Türblattwechselmodul 35. Figur 12 zeigt ein Doppelfalzwechselmodul. Figur 13 zeigt ein Einfachfalzwechselmodul. Figur 14 zeigt ein Brandschutztürwechselmodul, bei dem Körper aus Hartholz gefertigt ist, um den herum ein Stahlblech verläuft.

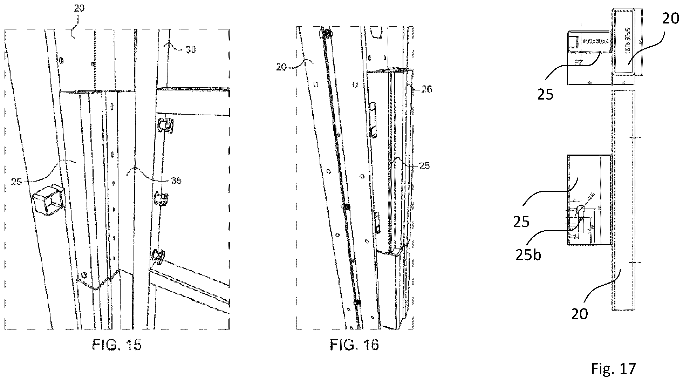

Fig. 15 zeigt einen Türrahmen 20 mit Einfachfalzmodul 25 und einen Ausschnitt eines Türblatts 30 ebenfalls mit einem Einfachfalzmodul 35 aus Hartholz.

Fig. 16 zeigt einen Türrahmen 20 mit Doppelfalzmodul wie in Fig. 6 oder 7. Das Doppelfalzmodul wird hier aus dem Rahmenwechselmodul 25 und dem Anschlag 26 gebildet.

Fig. 17 zeigt ein Rahmenwechselmodul 25 mit einer Öffnung 25b für einen Schließzylindereinsatz, mit dem ein Auffräsen, Ausbohren oder Ausbrechen, Ausschlagen oder Wegbrechen eines Schließzylinders geübt werden kann. Da eine Tür mit intaktem Schloss verschlossen ist, ist das Rahmenwechselmodul 25 mit Schließzylindereinsatz vorzugsweise am Türrahmen 20 befestigt, der für das Üben die meiste Standfestigkeit bietet. Es ist auch möglich (nicht dargestellt) das Wechselmodul mit Schließzylindereinsatz am Türblatt zu befestigen.

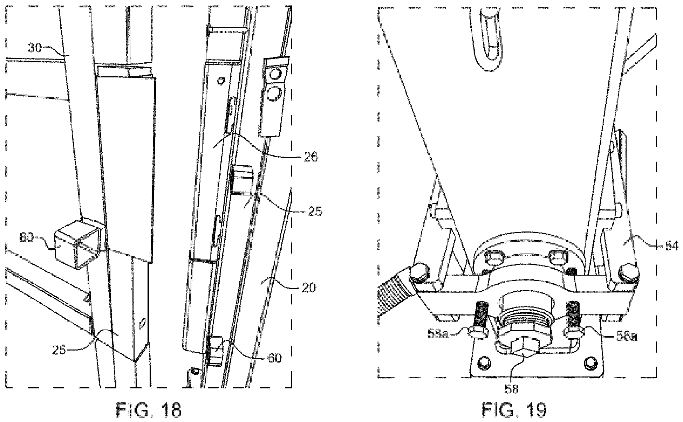

Fig. 18 zeigt einen Türrahmen 20 mit Einfachfalzmodul 25 mit Anschlag 26 und einem Türblatt 30 mit einen Brandschutztürmodul, wie in Figur 6. Das Blech überdeckt das Rahmenwechselmodul 25, wodurch ein Einbringen eines Brecheisens erschwert wird.

Fig. 19 zeigt ein Scharnier 50 gemäß Figur 5 von außen. Der Führungsbolzen 58 wird in eine Hülse reingeschraubt und rückt die Feder 56 im Innern zusammen. Seitlich dazu sind Feineinstellschrauben 58a angeordnet, mit denen der Spalt zwischen Türblatt und Türrahmen präzise eingestellt werden kann. Der Führungsbolzen 58 drückt mit der Hülse auf die Feder, die dann den Abstand zwischen dem Scharnierrahmen 54 und dem Türrahmen 20 beim Hineinschrauben verändert und somit den Abstand zwischen Türrahmen 20 und Türblatt 30.

Die erfindungsgemäße Trainingstür weist mehrere unabhängige Elemente oder Eigenschaften auf, mit oder an denen verschiedene Aufbruchtechniken unter verschiedenen Bedingungen geübt werden können. Dabei kann der Einsatz von verschiedenen Werkzeugen und deren Wirkungsweise trainiert werden. Dies ist insbesondere daher wichtig, da im realen Einsatz nicht immer das richtige oder beste Werkzeug greifbar ist. Daher ist die Übung mit verschiedenen Werkzeugen sehr sinnvoll. Weiter sind die Zeitanforderungen zum Öffnen einer Tür auch verschieden. Es gibt Situationen, in denen es um Sekunden geht und bei denen der Zustand der Tür nach dem Aufbrechen unerheblich ist. In anderen Situationen spielt Zeit eine untergeordnete Rolle und der Erhalt der Tür ist wichtiger.

Mit der erfindungsgemäßen Tür ist somit ein Aufhebeln zwischen Türblatt und Türrahmen an verschiedenen Stellen möglich. Weiter können viele verschiedene Wechselmodule verwendet und kombiniert werden, mit denen verschiedene Türblattprofile und Türrahmenprofile simuliert werden können. Wenn diese beim Aufhebeln zerstört werden, können sie unaufwändig ersetzt werden.

Durch das Wechselmodul mit Schließzylinder kann ein Ziehen oder Aufbohren eines Schlossen trainiert werden.

Einschubvorrichtungen auf verschiedenen Positionen am Türrahmen und auch am Türblatt die bezgl. Größe und Position aufeinander abgestimmt oder zueinander ausgerichtet sind, ermöglichen ein Simulieren einer verschlossenen Tür, die zusätzlich mit Verriegelungsbalken und -stangen gesichert ist.

Durch eine Öse 75 am Türrahmen 20 und einem daran befestigten Vorhängeschloss (nicht dargestellt) kann ein Aufbrechen eines Vorhängeschlosses durch Aufschlagen oder mittels eines Bolzenschneiders trainiert werden. An der seitlich am äußeren Türrahmen angebrachte Öse 75 kann auch eine Kette befestigt sein, um ein Lösen oder Aufbrechen einer Kette zu üben.

Die verfahrbare Bodenplatte 40 sichert einen festen Stand zum Üben und ermöglicht, dass die erfindungsgemäße Trainingstür nach dem Training wegbewegt werden kann.

Die massiv oder stabil ausgebildeten Stahlrahmen 20 und Türblattrahmen 33 stellen eine robuste Struktur für den wiederverwendbaren Trainingseinsatz dar.

Durch die in den Türblattrahmen 33 einsetzbaren Platten 38 ist ein Aufsägen oder Eintreten oder Einrammen von Türen trainierbar aber auch verschiedene unterschiedliche Schwingungsverhalten von Türblättern, bspw. aus Vollholz, für Hohlkammer-Türen, Metall etc.

## Patentansprüche

1. Trainingstür (10) für Einsatzkräfte, umfassend:
- einen Türrahmen (20); und
- ein am Türrahmen (20) befestigtes Türblatt (30), wobei das Türblatt (30) an wenigstens zwei Scharnieren (50) im Türrahmen (20) aufgehängt ist;
wobei der Türrahmen (20) ein austauschbares Rahmenwechselmodul (25) aufweist, und das Rahmenwechselmodul (25) vorgesehen ist, um verschiedene Türrahmenprofile zu simulieren;
wobei das Türblatt (30) ein Türblattwechselmodul (35) aufweist, und das Türblattwechselmodul (35) vorgesehen ist, um verschiedene Türblattprofile zu simulieren;
wobei auf einer Schlossseite (31) des Türrahmens (20) eine als Ausbuchtung ausgebildete Aufnahmevorrichtung (21) für das Rahmenwechselmodul (25) angeordnet ist; und
wobei auf einer Schlossseite (31) des Türblatts (30) eine Aufnahmevorrichtung (37) für das Türblattwechselmodul (35) angeordnet ist;
**dadurch gekennzeichnet, dass**
der Türrahmen (20) auf einer Bodenplatte (40) befestigt ist;
wenigstens eines der Scharniere (50) eine einstellbare Anpressvorrichtung (55) aufweist; und
das Rahmenwechselmodul (25) und das Türblattwechselmodul (35) eine im Wesentlichen gleiche Höhe aufweisen.

2. Trainingstür für Einsatzkräfte nach Anspruch 1, wobei mittels der einstellbaren Anpressvorrichtung (55) ein Anpressdruck des Türblatts (30) von einer Scharnierseite (32) des Türblatts (30) in Richtung Schlossseite (31) des Türblatts (30) einstellbar ist und/oder die einstellbare Anpressvorrichtung (55) wenigstens eine Feder (56) umfasst, vorzugsweise eine Schraubenfeder, deren Federweg verstellbar ist.

3. Trainingstür für Einsatzkräfte nach einem der vorhergehenden Ansprüche, wobei die Anpressvorrichtung (55) einen Scharnierrahmen (54) aufweist, der wenigsten teilweise um den Türrahmen (20) herum verläuft, wobei die Anpressvorrichtung (55) einen zentral durch den Türrahmen (20) geführten Führungsbolzen (58) aufweist, wobei der Scharnierrahmen (54) vom Türrahmen (20) in einer horizontalen Richtung geführt wird, wenn der Führungsbolzen (58) gedreht wird.

4. Trainingstür für Einsatzkräfte nach einem der vorhergehenden Ansprüche, wobei die einstellbare Anpressvorrichtung (55) eine Skala für einen Anpressdruck aufweist, an der ein gewünschter Türtyp einstellbar und/oder ablesbar ist.

5. Trainingstür für Einsatzkräfte nach einem der vorhergehenden Ansprüche, wobei das Rahmenwechselmodul (25) und/oder das Türblattwechselmodul (35) eine Öffnung für einen Schließzylinder aufweisen, in die ein Schließzylinder einsetzbar ist.

6. Trainingstür für Einsatzkräfte nach einem der vorhergehenden Ansprüche, wobei das Rahmenwechselmodul (25) und/oder das Türblattwechselmodul (35) eine Höhe aufweisen, die über einen Schlossbereich des Türblatts (30) übersteht.

7. Trainingstür für Einsatzkräfte nach einem der vorhergehenden Ansprüche, wobei das Rahmenwechselmodul (25) einen Doppelfalz und/oder Einfachfalz des Türrahmens (20) nachbildet und/oder das Türblattwechselmodul (35) einen Doppelfalz und/oder Einfachfalz des Türblatts (30) nachbildet.

8. Trainingstür für Einsatzkräfte nach einem der vorhergehenden Ansprüche, wobei am Türrahmen (20) und/oder am Türblatt (30) Einschubvorrichtungen (60) zum Einführen von Verriegelungselementen (70) angeordnet sind und/oder wobei der Türrahmen (20) aus Metall ausgebildet ist, vorzugsweise ist der Türrahmen (20) aus einem Hohlprofil ausgebildet und/oder mit der Bodenplatte (40) verschweißt.

9. Trainingstür für Einsatzkräfte nach einem der vorhergehenden Ansprüche, wobei die Bodenplatte (40) höhenverstellbar und/oder verfahrbar ist und/oder eine Standfläche aufweist, die mit Loch- bzw. Riffelblech abgedeckt ist und/oder die Bodenplatte (40) einen umlaufenden Bodenplattenrahmen (41) aufweist, an dem der Türrahmen (20) befestigt ist, wobei sich der Bodenplattenrahmen (41) auf beiden Türseiten erstreckt und/oder wobei in den Bodenplattenrahmen (41) Standflächenbleche (42) oder -platten einsetzbar sind, um verschiedene Bodenbeläge zu simulieren und/oder wobei die Bodenplatte (40) wenigstens zwei klappbaren Räder (43) zum Verfahren der Trainingstür (10) und/oder Einschubholme (44) für ein Einführen eines Hubwagens oder Gabelstaplers aufweist.

10. Trainingstür für Einsatzkräfte nach einem der vorhergehenden Ansprüche, wobei das Türblatt (30) einen umlaufenden Türblattrahmen (33) aufweist, an dem die Scharniere (50) auf der Scharnierseite (32) und/oder ein Schloss (29) auf der Schlossseite (31) befestigt oder ausgebildet sind und/oder wobei der Türblattrahmen (33) wenigstens einen Teilrahmenbereich (36) aufweist, in den eine Platte (36a) einsetzbar ist, wobei Platten aus verschiedenen Materialen und Stärken verwendbar sind, um verschiedene Türaufbauten zu simulieren.

11. Trainingstür für Einsatzkräfte nach einem der vorhergehenden Ansprüche, wobei das Türblatt (30) um 180 Grad drehbar ist und somit verschiedene Öffnungsrichtungen der Tür simulierbar sind

12. Trainingstür für Einsatzkräfte nach einem der vorhergehenden Ansprüche, wobei sich das Rahmenwechselmodul (25) und das Türblattwechselmodul (35) gegenüberliegen, so dass sie nach dem Drehen des Türblatts (30) um die horizontale Mittelachse wieder aneinander anschlagen.

13. Trainingstür für Einsatzkräfte nach einem der vorhergehenden Ansprüche, wobei die Aufnahmevorrichtung (37) für das Türblattwechselmodul (35) als Aufnahmeausbuchtung in einem Türblattrahmen (33) ausgebildet ist.

14. Trainingstür für Einsatzkräfte nach Anspruch 13, wobei die Aufnahmeausbuchtung im Türblattrahmen (33) zur Aufnahme des Türblattwechselmoduls (35) und/oder eines Teils des Rahmenwechselmodul (25) ausgebildet ist.

15. Trainingstür für Einsatzkräfte nach einem der vorhergehenden Ansprüche, wobei in einem oberen und/oder in einem unteren Bereich des Türrahmens (20) ein oder mehrere Hilfsrahmenmodule (25a, 25b) angebracht sind, um einen festen Sitz des Türblatts (30) im Türrahmen (20) zu gewährleisten.

## Claims

1. A training door (10) for emergency personnel, comprising:
- a door frame (20); and
- a door leaf (30) attached to the door frame (20), wherein the door leaf (30) is suspended in the door frame (20) on at least two hinges (50);
wherein the door frame (20) has an interchangeable frame change module (25), and the frame change module (25) is configured to simulate different door frame profiles;
wherein the door leaf (30) has a door leaf change module (35), and the door leaf change module (35) is configured to simulate different door leaf profiles;
wherein a receiving device (21) configured as a bulge for the frame change module (25), is disposed on a lock side (31) of the door frame (20); and
wherein a receiving device (37) for the door leaf change module (35) is disposed on a lock side (31) of the door leaf (30);
**characterized in that**
the door frame (20) is attached to a base plate (40);
at least one of the hinges (50) has an adjustable pressure device (55); and
the frame change module (25) and the door leaf change module (35) have essentially the same height.

2. The training door for emergency personnel according to claim 1, wherein a pressure of the door leaf (30) from a hinge side (32) of the door leaf (30) towards the lock side (31) of the door leaf (30) can be adjusted by means of the adjustable pressure device (55) and/or the adjustable pressure device (55) comprises at least one spring (56), preferably a coil spring, the spring travel of which is adjustable.

3. The training door for emergency personnel according to any one of the preceding claims, wherein the pressure device (55) has a hinge frame (54) which runs at least partially around the door frame (20), wherein the pressure device (55) has a guide bolt (58), centrally guided through the door frame (20), wherein the hinge frame (54) is guided by the door frame (20) in a horizontal direction when the guide bolt (58) is rotated.

4. The training door for emergency personnel according to any one of the preceding claims, wherein the adjustable pressure device (55) has a scale for a pressure, on which a desired door type can be set and/or read.

5. The training door for emergency personnel according to any one of the preceding claims, wherein the frame change module (25) and/or the door leaf change module (35) have an opening for a locking cylinder into which a locking cylinder can be inserted.

6. The training door for emergency personnel according to any one of the preceding claims, wherein the frame change module (25) and/or the door leaf change module (35) have a height that extends beyond a lock area of the door leaf (30).

7. The training door for emergency personnel according to any one of the preceding claims, wherein the frame change module (25) replicates a double rebate and/or single rebate of the door frame (20) and/or the door leaf change module (35) replicates a double rebate and/or single rebate of the door leaf (30).

8. The training door for emergency personnel according to any one of the preceding claims, wherein insertion devices (60) for inserting locking elements (70) are disposed on the door frame (20) and/or on the door leaf (30) and/or wherein the door frame (20) is made of metal, preferably the door frame (20) is made of a hollow profile and/or welded to the base plate (40).

9. The training door for emergency personnel according to any one of the preceding claims, wherein the base plate (40) is height-adjustable and/or movable and/or has a floor surface covered with perforated or corrugated sheet metal, and/or the base plate (40) has a circumferential base plate frame (41) to which the door frame (20) is attached, wherein the base plate frame (41) extends on both sides of the door and/or wherein floor surface sheets (42) or plates can be inserted into the base plate frame (41) in order to simulate different floor coverings and/or wherein the base plate (40) has at least two folding wheels (43) for moving the training door (10) and/or insertion bars (44) for inserting a pallet truck or forklift.

10. The training door for emergency personnel according to any one of the preceding claims, wherein the door leaf (30) has a circumferential door leaf frame (33) on which the hinges (50) on the hinge side (32) and/or a lock (29) on the lock side (31) are attached or formed, and/or wherein the door leaf frame (33) has at least a partial frame area (36) into which a plate (36a) can be inserted, wherein plates made from different materials and having different thicknesses can be used to simulate different door constructions.

11. The training door for emergency personnel according to any one of the preceding claims, wherein the door leaf (30) is rotatable by 180 degrees and thus different opening directions of the door can be simulated.

12. The training door for emergency personnel according to any one of the preceding claims, wherein the frame change module (25) and the door leaf change module (35) are opposite each other, such that they abut each other again after the door leaf (30) has been rotated about the horizontal central axis.

13. The training door for emergency personnel according to any one of the preceding claims, wherein the receiving device (37) for the door leaf change module (35) is configured as a receiving bulge in a door leaf frame (33).

14. The training door for emergency personnel according to claim 13, wherein the receiving bulge in the door leaf frame (33) is configured to receive the door leaf change module (35) and/or a part of the frame change module (25).

15. The training door for emergency personnel according to any one of the preceding claims, wherein one or more auxiliary frame modules (25a, 25b) are attached in an upper and/or a lower area of the door frame (20) to ensure a secure seating of the door leaf (30) in the door frame (20).

## Revendications

1. Porte d'entraînement (10) pour des forces d'intervention, comprenant :
- un cadre de porte (20) ; et
- un vantail de porte (30) fixé au cadre de porte (20), dans laquelle le vantail de porte (30) est suspendu à au moins deux charnières (50) dans le cadre de porte (20) ;
dans laquelle le cadre de porte (20) comporte un module d'échange de cadre interchangeable (25) et le module d'échange de cadre (25) est destiné à simuler différents profilés de cadre de porte ;
dans laquelle le vantail de porte (30) comporte un module d'échange de vantail de porte (35) et le module d'échange de vantail de porte (35) est destiné à simuler différents profilés de vantail de porte,
dans laquelle un dispositif de réception (21) réalisé sous la forme d'une cavité pour le module d'échange de cadre (25) est agencé sur un côté de serrure (31) du cadre de porte (20) ; et
dans laquelle un dispositif de réception (37) pour le module d'échange de vantail de porte (35) est agencé sur un côté de serrure (31) du vantail de porte (30) ;
**caractérisée en ce que** le cadre de porte (20) est fixé sur un panneau de plancher (40) ;
au moins une des charnières (50) comporte un dispositif d'appui réglable (55) ; et
le module d'échange de cadre (25) et le module d'échange de vantail de porte (35) ont une hauteur sensiblement identique.

2. Porte d'entraînement pour des forces d'intervention selon la revendication 1, dans laquelle une pression d'appui du vantail de porte (30) peut être réglée au moyen du dispositif d'appui réglable (55) à partir d'un côté de charnière (32) du vantail de porte (30) en direction du côté de serrure (31) du vantail de porte (30) et/ou le dispositif d'appui réglable (55) comprend au moins un ressort (56), de préférence un ressort hélicoïdal, dont la course de ressort est réglable.

3. Porte d'entraînement pour des forces d'intervention selon l'une des revendications précédentes, dans laquelle le dispositif d'appui (55) comporte un cadre de charnière (54) qui s'étend au moins partiellement autour du cadre de porte (20), dans laquelle le dispositif d'appui (55) comporte un boulon de guidage (58) guidé centralement par le cadre de porte (20), dans laquelle le cadre de charnière (54) est guidé par le cadre de porte (20) dans une direction horizontale lorsque le boulon de guidage (58) tourne.

4. Porte d'entraînement pour des forces d'intervention selon l'une des revendications précédentes, dans laquelle le dispositif d'appui réglable (55) comporte une échelle pour une pression d'appui, sur laquelle un type de porte souhaité peut être réglé et/ou lu.

5. Porte d'entraînement pour des forces d'intervention selon l'une des revendications précédentes, dans laquelle le module d'échange de cadre (25) et/ou le module d'échange de vantail de porte (35) comportent une ouverture pour un barillet de fermeture, dans laquelle un barillet de fermeture peut être inséré.

6. Porte d'entraînement pour des forces d'intervention selon l'une des revendications précédentes, dans laquelle le module d'échange de cadre (25) et/ou le module d'échange de vantail de porte (35) ont une hauteur qui dépasse une zone de serrure du vantail de porte (30).

7. Porte d'entraînement pour des forces d'intervention selon l'une des revendications précédentes, dans laquelle le module d'échange de cadre (25) reproduit une double feuillure et/ou une simple feuillure du cadre de porte (20) et/ou le module d'échange de vantail de porte (35) reproduit une double feuillure et/ou une simple feuillure du vantail de porte (30).

8. Porte d'entraînement pour des forces d'intervention selon l'une des revendications précédentes, dans laquelle des dispositifs enfichables (60) sont agencés sur le cadre de porte (20) et/ou sur le vantail de porte (30) pour insérer des éléments de verrouillage (60) et/ou dans laquelle le cadre de porte (20) est en métal, le cadre de porte (60) étant de préférence réalisé à partir d'un profilé creux et/ou étant soudé au panneau de plancher (40).

9. Porte d'entraînement pour des forces d'intervention selon l'une des revendications précédentes, dans laquelle le panneau de plancher (40) est réglable en hauteur et/ou peut être déplacé et/ou comporte une surface d'appui qui est recouverte de tôle perforée ou ondulée et/ou le panneau de plancher (40) comporte un châssis de panneau de plancher circonférentiel (41) auquel le cadre de porte (20) est fixé, dans laquelle le châssis de panneau de plancher (41) s'étend des deux côtés de la porte et/ou dans laquelle des tôles (42) ou des plaques de surface d'appui peuvent être insérées dans le châssis de panneau de plancher (41) afin de simuler différents revêtements de sol et/ou dans laquelle le panneau de plancher (40) comporte au moins deux roulettes repliables (43) pour mettre la porte d'entraînement (10) en mouvement et/ou des montants enfichables (44) pour y introduire un chariot élévateur ou un transpalette.

10. Porte d'entraînement pour des forces d'intervention selon l'une des revendications précédentes, dans laquelle le vantail de porte (30) comporte un cadre de vantail de porte circonférentiel (33) auquel les charnières (50) du côté de charnière (32) et/ou une serrure (29) du côté de serrure (31) sont fixées ou formées et/ou dans laquelle le cadre de vantail de porte (33) comporte au moins une zone de cadre partielle (36) dans laquelle une plaque (36a) peut être insérée, dans laquelle des plaques en différents matériaux et de différentes épaisseurs peuvent être utilisées pour simuler différentes structures de porte.

11. Porte d'entraînement pour des forces d'intervention selon l'une des revendications précédentes, dans laquelle le vantail de porte (30) peut tourner de 180 degrés et différentes directions d'ouverture de la porte peuvent ainsi être simulées.

12. Porte d'entraînement pour des forces d'intervention selon l'une des revendications précédentes, dans laquelle le module d'échange de cadre (25) et le module d'échange de vantail de porte (35) sont l'un en face de l'autre de telle sorte qu'après la rotation du vantail de porte (30) autour de l'axe central horizontal, ils viennent de nouveau en butée l'un contre l'autre.

13. Porte d'entraînement pour des forces d'intervention selon l'une des revendications précédentes, dans laquelle le dispositif de réception (37) pour le module d'échange de vantail de porte (35) est réalisé sous la forme d'une cavité de réception dans un cadre de vantail de porte (33).

14. Porte d'entraînement pour des forces d'intervention selon la revendication 13, dans laquelle la cavité de réception dans le cadre de vantail de porte (33) est réalisée de manière à recevoir le module d'échange de vantail de porte (35) et/ou une partie du module d'échange de cadre (25).

15. Porte d'entraînement pour des forces d'intervention selon l'une des revendications précédentes, dans laquelle un ou plusieurs modules de cadre auxiliaires (25a, 25b) sont montés dans une zone supérieure et/ou dans une zone inférieure du cadre de porte (20) afin d'assurer un appui fixe du vantail de porte (30) dans le cadre de porte (20).
